# EUROPEAN PATENT APPLICATION

(11) **EP 4 707 472 A1**
(43) Date of publication of application: **11.03.2026**
(21) Application number: 24839527.9
(22) Date of filing: 26.06.2024
(51) Int. Cl.: E02F 9/00, B60K 8/00, B60K 11/06, B60K 15/063, B60L 50/70, E02F 9/08, F01P 3/18, F02M 21/02, H01M 8/00, H01M 8/04

(54) **WORK MACHINE**

(30) Priority: 07.07.2023 JP 2023112479; 20.09.2023 JP 2023152360
(71) Applicant: KOBELCO CONSTRUCTION MACHINERY CO., LTD., Hiroshima-shi, Hiroshima 731-5161 (JP)
(72) Inventor: KUGATA, Yuichi, Hiroshima-shi, Hiroshima 731-5161 (JP); KAMADA, Masashi, Hiroshima-shi, Hiroshima 731-5161 (JP); YOSHIDA, Michio, Hiroshima-shi, Hiroshima 731-5161 (JP)
(74) Representative: TBK
(86) International application number: PCT/JP2024/023220
(87) International publication number: WO 2025/013634

(57) **Abstract**

A work machine (100) comprises: a hydrogen tank (31) that stores hydrogen; an energy generation device (32) that is disposed below the hydrogen tank (31) and generates energy by using the hydrogen as an energy source; a hydrogen pipe (41) that connects the hydrogen tank (31) and the energy generation device (32); and a support structure (60) that supports at least one of the hydrogen tank (31) and the energy generation device (32). The support structure (60) includes an intervening portion (63, 206, 208, 306, 802) positioned between the hydrogen tank (31) and the energy generation device (32), and the intervening portion has a guide portion (63C, 210A, 210B, 308, 804) that guides the hydrogen from a position below the intervening portion to a position above the intervening portion.

## Description

### Technical Field

The present disclosure relates to a work machine such as a hydraulic excavator including a hydrogen tank that stores hydrogen.

### Background Art

Patent Literature 1 discloses a work machine having an energy recovery system including an energy storage system. The energy storage system includes at least a portion of a hydraulic accumulator, a battery, a flywheel, an ultracapacitor, a fuel cell, an auxiliary power unit. It is also disclosed that at least a portion of the energy storage system is installed as a counterweight.

Incidentally, in a work machine including an energy generation device that generates energy by using hydrogen as an energy source, hydrogen may leak from the energy generation device, a pipe (hydrogen pipe) connected to the energy generation device, a connection portion between the energy generation device and the hydrogen pipe, and the like. In this case, it is preferable to suppress retention of hydrogen. On the other hand, Patent Literature 1 discloses that an energy storage system is mounted on a counterweight, but does not consider retention of hydrogen at all. Examples of the energy generation device include a fuel cell device and a hydrogen engine.

### Citation List

### Patent Literature

Patent Literature 1: JP 2014-9589 A

### Summary of Invention

An object of the present disclosure is to provide a work machine capable of suppressing retention of hydrogen when the hydrogen leaks.

A work machine according to a first aspect includes a hydrogen tank that stores hydrogen, an energy generation device that is disposed below the hydrogen tank and generates energy by using the hydrogen as an energy source, a hydrogen pipe that connects the hydrogen tank and the energy generation device, and a support structure that supports at least one of the hydrogen tank and the energy generation device, in which the support structure includes an intervening portion located between the hydrogen tank and the energy generation device, and the intervening portion includes a guide portion that guides the hydrogen from a position below the intervening portion to a position above the intervening portion.

### Brief Description of Drawings

FIG. 1 is a left side view illustrating a work machine according to an embodiment of the present disclosure.
FIG. 2 is a perspective view of an upper slewing body of the work machine as viewed from diagonally behind on the left.
FIG. 3 is a diagram illustrating the inside of a machine chamber of the work machine according to a first embodiment of the present disclosure, and is a cross-sectional view taken along line A-A in FIG. 1.
FIG. 4 is a perspective view of a support structure that supports a hydrogen tank.
FIG. 5 is a diagram illustrating the inside of a machine chamber of the work machine according to a second embodiment of the present disclosure, and is a cross-sectional view taken along line A-A in FIG. 1.
FIG. 6 is a perspective view of a support structure of a work machine according to a third embodiment of the present disclosure.
FIG. 7 is a diagram illustrating the inside of a machine chamber of the work machine according to a fourth embodiment of the present disclosure, and is a cross-sectional view taken along line A-A in FIG. 1.
FIG. 8 is a diagram illustrating the inside of a machine chamber of the work machine according to a fifth embodiment of the present disclosure, and is a cross-sectional view taken along line A-A in FIG. 1.
FIG. 9 is a diagram illustrating the inside of a machine chamber of the work machine according to a sixth embodiment of the present disclosure, and is a cross-sectional view taken along line A-A in FIG. 1.
FIG. 10 is a diagram illustrating the inside of a machine chamber of the work machine according to a seventh embodiment of the present disclosure, and is a cross-sectional view taken along line A-A in FIG. 1.
FIG. 11 is a perspective view of a support structure of a work machine corresponding to a modification of the present disclosure.

### Description of Embodiments

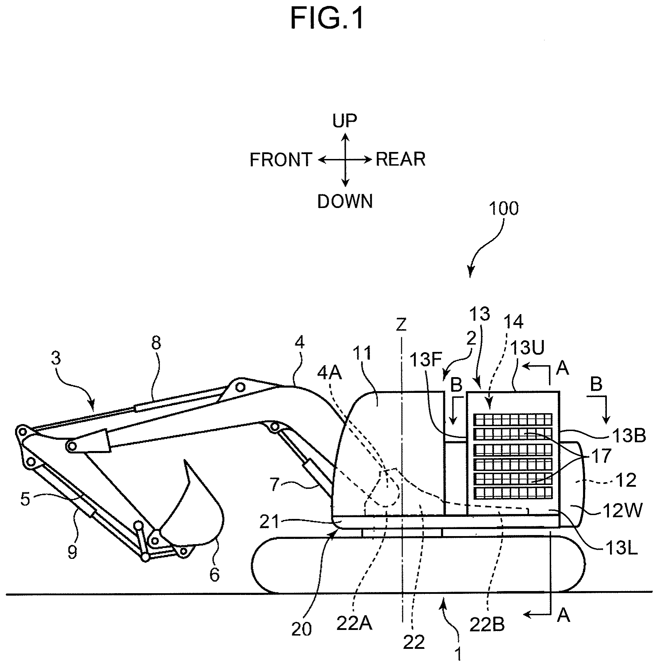

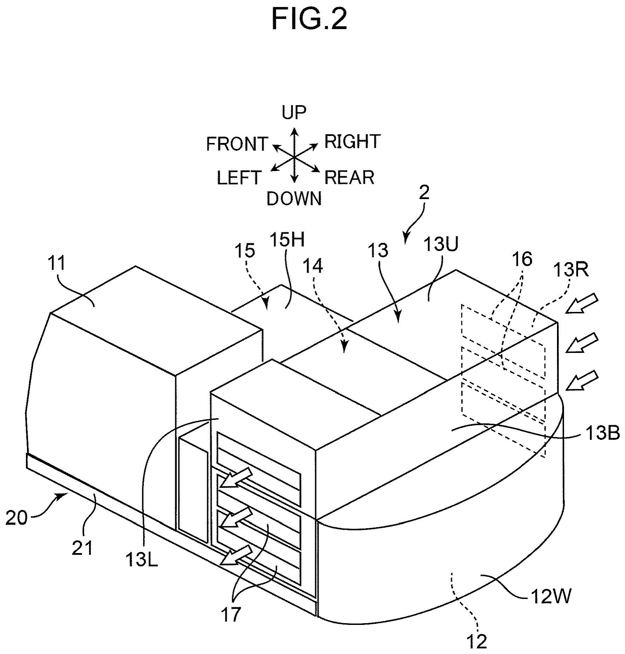

Embodiments of the present disclosure will be described with reference to the drawings. FIG. 1 is a left side view illustrating a work machine 100 according to an embodiment of the present disclosure. FIG. 2 is a perspective view of an upper slewing body 2 of the work machine 100 as viewed from diagonally behind on the left.

The work machine 100 includes a lower travelling body 1 including a travelling device, an upper slewing body 2 supported by the lower travelling body 1 so as to be swingable with respect to the lower travelling body 1 about a slewing axis Z extending vertically, and a work device 3 supported by the upper slewing body 2. Although the work machine 100 according to the present embodiment is a hydraulic excavator, a work machine in the present disclosure is not limited to a hydraulic excavator, and may be another work machine such as a crane or a bulldozer. The travelling device may be, for example, a crawler type travelling device or a travelling device having a tire.

The upper slewing body 2 includes a slewing frame 20, a cab 11 supported by the slewing frame 20, and a counterweight 12.

The slewing frame 20 is a member swingably supported on the lower travelling body 1. The slewing frame 20 includes a frame body 21 and a standing body 22. The frame body 21 has an upper surface having a size in which the cab 11, a cover 13, and the like can be disposed. The cab 11 is disposed at the left front portion of the frame body 21, and the counterweight 12 is disposed at the rear portion of the frame body 21 or behind the frame body 21. A driver's seat, an operation lever, an operation pedal, and the like are disposed in the cab 11. A machine chamber 14 is formed behind the cab 11.

In the present embodiment, the machine chamber 14 is formed behind the cab 11 and in front of the counterweight 12, and is defined by the cover 13. The cover 13 only needs to have a shape capable of defining the machine chamber 14, and a specific shape is not particularly limited. The cover 13 may have, for example, a box shape. Note that, in a case where the weight of the device disposed in the machine chamber 14 is large, the counterweight 12 can be omitted.

The standing body 22 supports a boom 4 such that the boom 4 can be raised and lowered. The standing body 22 has a shape that stands upright from the frame body 21 and extends forward and backward as indicated by a broken line in FIG. 1. The standing body 22 includes a boom attachment portion 22A (front portion) to which a base end portion 4A of the boom 4 indicated by a broken line in FIG. 1 is attached, and a rear portion 22B. The rear portion 22B is located behind the boom attachment portion 22A and is lower in height than the boom attachment portion 22A. In the present embodiment, the standing body 22 includes a pair of left and right standing plates facing each other with an interval therebetween in the left and right directions. Each of the pair of left and right standing plates is a plate-like member standing upright from the frame body 21, and extends forward and backward from the front end to the rear end.

The cover 13 defines a machine chamber 14. The cover 13 is a housing including a front wall portion 13F located on the front side of the machine chamber 14, a rear wall portion 13B located on the rear side of the machine chamber 14, a left wall portion 13L located on the left side of the machine chamber 14, a right wall portion 13R located on the right side of the machine chamber 14, and an upper wall portion 13U located on the upper side of the machine chamber 14. The cover 13 prevents a hydrogen tank 31 (to be described later) accommodated in the machine chamber 14 from being exposed to direct sunlight. The cover 13 prevents liquid such as muddy water from adhering to the electronic device 34 and the hydraulic device accommodated in the machine chamber 14.

The upper slewing body 2 further includes a weight cover 12W that covers the counterweight 12, and a device cover 15H that defines a device housing chamber 15 in which a device housing space for accommodating various devices is secured. In the present embodiment, the weight cover 12W is located behind the rear wall portion 13B, and the device cover 15H is disposed at the right front portion of the frame body 21 and is located in front of the front wall portion 13F. The weight cover 12W may constitute the counterweight itself. The device housing space inside the device housing chamber 15 may be a space constituting a part of the machine chamber 14 or may be a space different from the machine chamber 14.

The work device 3 includes a boom 4 attached to the upper slewing body 2 so as to be raised and lowered, an arm 5 swingably attached to the boom 4, and a distal end attachment 6 swingably attached to the arm 5. Although the distal end attachment 6 in the present embodiment is a bucket, the distal end attachment may be, for example, another distal end attachment such as a grapple, a fork, or a crusher.

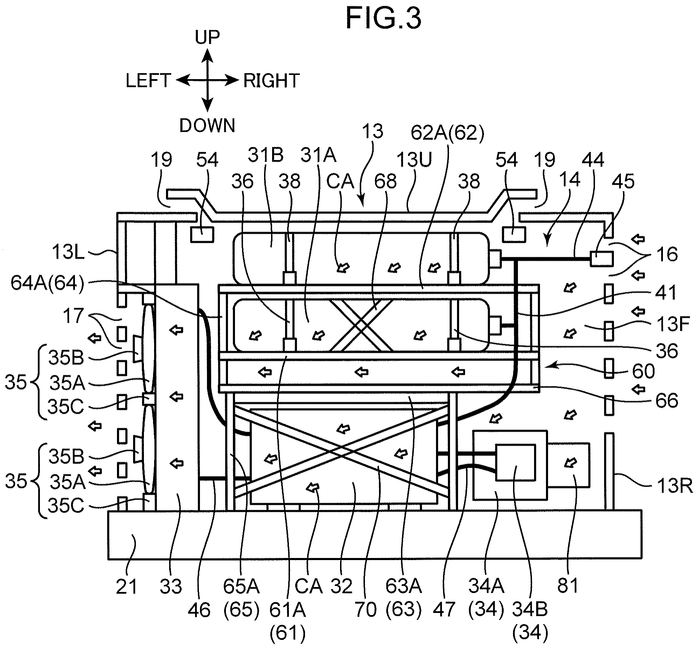

The hydraulic device includes a hydraulic pump 81 (see FIG. 3), a control valve (not illustrated), and a hydraulic oil tank (not illustrated). A part or all of the hydraulic device may be disposed inside the machine chamber 14 or may be disposed outside the machine chamber 14. A part or all of the hydraulic device may be disposed in a device housing space inside the device housing chamber 15, or may be disposed outside the device housing chamber 15. In the present embodiment, the hydraulic pump 81 is disposed in the machine chamber 14, and the control valve is disposed in the device housing space inside the device housing chamber 15. The hydraulic pump 81 is driven by an electric motor 34A described later to discharge hydraulic oil.

The work machine 100 includes a plurality of actuators. Each of the plurality of actuators operates by receiving supply of hydraulic oil from the hydraulic pump 81. The plurality of actuators include a boom cylinder 7 for raising and lowering the boom 4, an arm cylinder 8 for rotating the arm 5, a distal end attachment cylinder 9 for rotating the distal end attachment 6, a slewing motor (not illustrated) for slewing the upper slewing body 2 with respect to the lower travelling body 1, and a travelling motor (not illustrated) included in the travelling device of the lower travelling body 1.

The control valve is opened and closed such that hydraulic oil from the hydraulic pump 81 is supplied to an actuator corresponding to a lever operation or a pedal operation given to an operation device (not illustrated) by an operator.

### [First Embodiment]

FIG. 3 is a diagram illustrating the inside of the machine chamber 14 of the work machine 100 according to the first embodiment, and is a cross-sectional view taken along line A-A in FIG. 1. FIG. 3 illustrates various devices disposed in the machine chamber 14, and illustrates flows of the cooling air CA in the machine chamber 14 by arrows.

The work machine 100 according to the first embodiment includes a first hydrogen tank 31A and a second hydrogen tank 31B (hereinafter, when these are not distinguished, they may be referred to as a hydrogen tank 31) that store hydrogen, a fuel cell device 32 to which hydrogen (hydrogen gas) is supplied from the hydrogen tank 31, a heat exchanger 33 that exchanges heat with the cooling air CA, an electronic device 34 for operating the work machine 100, and a cover 13 that defines the machine chamber 14. In the machine chamber 14, the hydrogen tank 31 is disposed above the electronic device 34 in the vertical direction, and is disposed upstream of the heat exchanger 33 in the flow direction of the cooling air CA. Further, the hydrogen tank 31 is formed in a longitudinal shape, and the longitudinal direction thereof is disposed in parallel with the left-right direction of the work machine 100. The first hydrogen tank 31A and the second hydrogen tank 31B are disposed side by side in the vertical direction.

The hydrogen tank 31 is a resin tank formed in a longitudinal shape. Examples of the resin tank include a type-4 resin tank. The type-4 resin tank has a carbon fiber-reinforced plastic wound around the outside of a resin container, and has high strength. However, the hydrogen tank 31 is not limited to the type-4 resin tank, and may be another resin tank or a tank other than the resin tank.

The hydrogen tank 31 is connected to the fuel cell device 32 via a hydrogen pipe 41, and the hydrogen gas in the hydrogen tank 31 is supplied to the fuel cell device 32 via the hydrogen pipe 41. That is, the hydrogen pipe 41 is a pipe that connects the hydrogen tank 31 and the fuel cell device 32 and transfers hydrogen therebetween. A pressure reducing valve (not illustrated) may be provided on the path of the hydrogen pipe 41, and hydrogen decompressed by the pressure reducing valve may be supplied to the fuel cell device 32. The hydrogen tank 31 is connected to a hydrogen filling socket 45 for hydrogen filling via a filling pipe 44. In FIG. 3, the hydrogen pipe 41 and the filling pipe 44 are described as being connected to each other, but may be actually connected to the connection portion of the hydrogen tank 31 as separate pipes.

The fuel cell device 32 is disposed below the hydrogen tank 31 and functions as an energy generation device that generates energy by using hydrogen as an energy source. The fuel cell device 32 is configured to be able to supply electric power to the electric motor 34A. The fuel cell device 32 includes a fuel cell that generates electric power by electrochemically reacting hydrogen supplied from the hydrogen tank 31 with oxygen (for example, oxygen contained in air introduced from an intake port 16). The fuel cell includes, for example, a fuel cell stack including a plurality of cells. The fuel cell device 32 corresponds to an "energy generation device" in the claims.

The heat exchanger 33 cools the fuel cell of the fuel cell device 32. In the present embodiment, the heat exchanger 33 is configured to cause heat exchange between the cooling air CA and the cooling water circulating between the fuel cell device 32 and the heat exchanger 33. The heat exchanger 33 may be, for example, a radiator or another type of heat exchanger.

The electronic device 34 includes an electric motor 34A and an inverter 34B. The electronic device 34 may further include at least one of a converter, a battery, a compressor, a water pump, and a heater (not illustrated). The battery may be charged by electric power generated by the fuel cell device 32. In the present embodiment, the electric motor 34A and the inverter 34B are disposed upstream of the fuel cell device 32 in the flow direction of the cooling air CA. However, at least one of the electric motor 34A and the inverter 34B may be disposed downstream of the fuel cell device 32 in the flow direction of the cooling air CA, and specifically, may be disposed in a region between the fuel cell device 32 and the heat exchanger 33.

The electric motor 34A is a drive source that drives the hydraulic pump 81. The electric motor 34A operates by receiving power supplied from the fuel cell device 32. The electric motor 34A is configured by, for example, a three-phase motor. The electric motor 34A may operate by receiving power output from a battery.

The inverter 34B is connected to the fuel cell device 32 via a high-voltage wiring 47. The inverter 34B is interposed between the fuel cell device 32 and the electric motor 34A, converts a direct current supplied from at least one of the fuel cell device 32 and the battery into a three-phase alternating current, and supplies the three-phase alternating current to the electric motor 34A. The inverter 34B adjusts the rotation speed of the electric motor 34A.

The converter steps down a high voltage output from the fuel cell device 32 or the battery and supplies the stepped-down high voltage to a fan motor 35B of a cooling fan 35 described later. The compressor is, for example, a device that compresses a vaporized refrigerant, and is included in an air conditioner for adjusting a temperature in the cab 11. The water pump circulates cooling water between the fuel cell device 32 and the heat exchanger 33 through a water pipe 46. The heater may include at least one of an electric heater constituting a heating device for heating the inside of the cab 11, an electric heater for preheating the battery, and an electric heater for preheating the hydraulic oil.

In the work machine 100, even if hydrogen leaks from the hydrogen tank 31, since the hydrogen gas has a specific gravity based on air of less than 1 (that is, lighter than air), it is suppressed that the hydrogen gas moves upward from the hydrogen tank 31 in the machine chamber 14 and reaches the electronic device 34 and the fuel cell device 32 disposed below the hydrogen tank 31.

In the machine chamber 14, cooling air CA before passing through heat exchanger 33, that is, cooling air CA before a temperature rises due to heat exchange in heat exchanger 33 is supplied to hydrogen tank 31 disposed upstream of the heat exchanger 33. The temperature around the hydrogen tank 31 can rise due to heat generated by the operation of devices disposed inside the machine chamber 14 such as the fuel cell device 32, the electronic device 34, and the hydraulic pump 81. However, in the present embodiment, since the cooling air CA before passing through the heat exchanger 33 is also supplied to the surroundings of these devices, the temperature rise around the hydrogen tank 31 is more effectively suppressed. The suppression of the temperature rise around the hydrogen tank 31 also contributes to the suppression of the deterioration of the resin tank.

The cover 13 has an intake port 16 and an exhaust port 17. The intake port 16 is an opening through which air outside the machine chamber 14 is taken into the machine chamber 14 as cooling air CA. The exhaust port 17 is an opening for discharging cooling air CA inside machine chamber 14 to the outside of the machine chamber 14. In the present embodiment, the intake port 16 is formed in the right wall portion 13R of the cover 13, and the exhaust port 17 is formed in the left wall portion 13L of the cover 13. However, in the cover 13, a portion where the intake port 16 is formed is not limited to the right wall portion 13R, and a portion where the exhaust port 17 is formed is not limited to the left wall portion 13L. Specifically, for example, the intake port 16 may be formed in the left wall portion 13L, may be formed in the front wall portion 13F, may be formed in the rear wall portion 13B, or may be formed in the upper wall portion 13U. The exhaust port 17 may be formed in the right wall portion 13R, the front wall portion 13F, the rear wall portion 13B, or the upper wall portion 13U. It is preferable that the intake port 16 and the exhaust port 17 are formed in portions facing each other in the horizontal direction.

The work machine 100 includes a cooling fan 35 that forms a flow of the cooling air CA. The cooling fan 35 can effectively form a flow of the cooling air CA from the intake port 16 to the exhaust port 17 in the machine chamber 14. In the present embodiment, the cooling air CA flows from right to left as indicated by arrows in FIG. 3 in the machine chamber 14. The cooling fan 35 includes an impeller 35A including a plurality of blades disposed along an outer periphery of a rotary shaft, a fan motor 35B that drives the impeller 35A, and a shroud 35C disposed so as to surround an outer periphery of the impeller 35A. The shroud 35C is disposed with a gap in the radial direction with respect to the impeller 35A. The cooling fan 35 operates, for example, when electric power is supplied from the fuel cell device 32 or the battery.

In the present embodiment, the cooling fan 35 is disposed between the exhaust port 17 and the heat exchanger 33. Specifically, the cooling fan 35 is disposed between the exhaust port 17 and the heat exchanger 33 and adjacent to the exhaust port 17.

In the present embodiment, a part (upper part) of the intake port 16 is formed at a height position aligned in the horizontal direction with respect to the hydrogen tank 31, and the other part (lower part) of the intake port 16 is formed at a height position aligned in the horizontal direction with respect to the fuel cell device 32. A part (upper part) of the exhaust port 17 is formed at a height position aligned in the horizontal direction with respect to the hydrogen tank 31, and the other part (lower part) of the exhaust port 17 is formed at a height position aligned in the horizontal direction with respect to the fuel cell device 32. In the present embodiment, the entire region of the exhaust port 17 is formed at a height position aligned in the horizontal direction with respect to the heat exchanger 33. However, a part of the exhaust port 17 may be formed at a position offset upward with respect to the heat exchanger 33, or may be formed at a position offset downward with respect to the heat exchanger 33.

In the machine chamber 14, the fuel cell device 32 is disposed at a position below the hydrogen tank 31 in the vertical direction and at a position overlapping the hydrogen tank 31 when viewed from vertically above. In this case, the fuel cell device 32 can be efficiently disposed by utilizing the space below the hydrogen tank 31 in the machine chamber 14 having a limited size.

In the specific example illustrated in FIG. 3, the fuel cell device 32 is disposed immediately below the hydrogen tank 31 in the machine chamber 14. This makes it possible to more reliably raise the hydrogen leaked from at least one of the fuel cell device 32 and the connection portion between the fuel cell device 32 and the hydrogen pipe 41 toward the hydrogen tank 31.

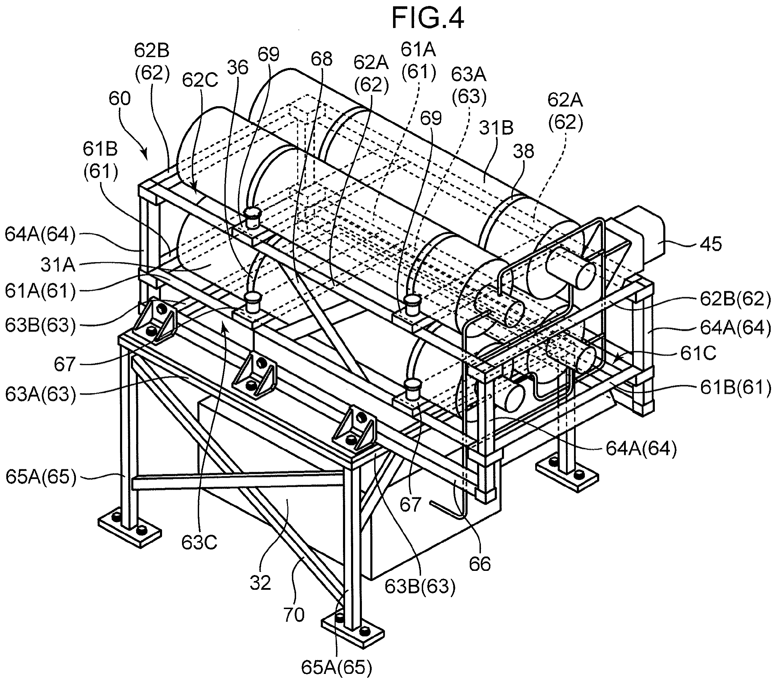

In the present embodiment, the work machine 100 includes a support structure 60 that supports the hydrogen tank 31. FIG. 4 is a perspective view of the support structure 60 that supports the hydrogen tank 31. As illustrated in FIG. 4, each of the first hydrogen tank 31A and the second hydrogen tank 31B includes two tanks arranged in the front-rear direction.

The support structure 60 includes a first frame 61 that supports the first hydrogen tank 31A, a second frame 62 that supports the second hydrogen tank 31B, a third frame 63 located above the fuel cell device 32, a first support leg 64 that supports the first frame 61 and the second frame 62, and a second support leg 65 that supports the third frame 63. The second frame 62 is located above the first frame 61. The third frame 63 is located above the fuel cell device 32 and below the first frame 61.

The first frame 61 is disposed parallel to the longitudinal direction of the first hydrogen tank 31A and supports the first hydrogen tank 31A. The first frame 61 is formed in a rectangular shape. Specifically, the first frame 61 includes a pair of long side parts 61A disposed parallel to the longitudinal direction of the first hydrogen tank 31A and a pair of short side parts 61B disposed perpendicular to the longitudinal direction. End portions of the pair of long side parts 61A and the pair of short side parts 61B are connected to each other to form a rectangular frame. In this regard, when the first frame 61 is viewed from vertically above, an opening 61C surrounded by the first frame 61 is formed. In addition, a pair of lateral beams 67 having both ends connected to the pair of long side parts 61A is provided between the pair of long side parts 61A. The lateral beam 67 is formed in a longitudinal shape and supports the first hydrogen tank 31A from below. The pair of lateral beams 67 is provided at a predetermined interval in the longitudinal direction of the long side part 61A. Further, end portions of fastening members 36 for fixing the first hydrogen tank 31A are connected to both ends of the lateral beam 67. In a state where the end portions of the fastening members 36 are connected to both ends of the lateral beam 67, the first hydrogen tank 31A is fastened by the fastening members 36, and the movement of the first hydrogen tank 31A is prevented.

The second frame 62 is disposed parallel to the longitudinal direction of the second hydrogen tank 31B and supports the second hydrogen tank 31B. The second frame 62 is formed in a rectangular shape. Specifically, the second frame 62 includes a pair of long side parts 62A disposed parallel to the longitudinal direction of the second hydrogen tank 31B and a pair of short side parts 62B disposed perpendicular to the longitudinal direction. End portions of the pair of long side parts 62A and the pair of short side parts 62B are connected to each other to form a rectangular frame. In this regard, when the second frame 62 is viewed from vertically above, an opening 62C surrounded by the second frame 62 is formed. In addition, a pair of lateral beams 69 having both ends connected to the pair of long side parts 62A is provided between the pair of long side parts 62A. The lateral beam 69 is formed in a longitudinal shape and supports the second hydrogen tank 31B from below. The pair of lateral beams 69 is provided at a predetermined interval in the longitudinal direction of the long side part 62A. End portions of fastening members 38 for fixing the second hydrogen tank 31B are connected to both ends of the lateral beam 69. In a state where the end portions of the fastening members 38 are connected to both ends of the lateral beam 69, the second hydrogen tank 31B is fastened by the fastening members 38, and the movement of the second hydrogen tank 31B is prevented.

The third frame 63 is located between the hydrogen tank 31 and the fuel cell device 32, and is disposed in parallel with the longitudinal direction of the hydrogen tank 31, similarly to the first frame 61 and the second frame 62. The third frame 63 is formed in a rectangular shape. Specifically, the third frame 63 includes a pair of long side parts 63A disposed parallel to the longitudinal direction of the hydrogen tank 31 and a pair of short side parts 63B disposed perpendicular to the longitudinal direction. End portions of the pair of long side parts 63A and the pair of short side parts 63B are connected to each other to form a rectangular frame. In this regard, when the third frame 63 is viewed from vertically above, an opening 63C surrounded by the third frame 63 is formed. The third frame 63 corresponds to an "intervening portion" in the claims, and the opening 63C corresponds to a "guide portion" and an "opening surrounded by the frame" in the claims.

A pair of extension members 66 formed in a longitudinal shape is integrally connected directly above the third frame 63. The extension member 66 is disposed parallel to the long side part 63A, and one end in the longitudinal direction extends to the outside of one end of the long side part 63A.

The first frame 61 and the second frame 62 are disposed at positions overlapping each other when viewed from vertically above. Further, the long side part 61A of the first frame 61, the long side part 62A of the second frame 62, and the extension member 66 are disposed at positions overlapping each other when viewed from vertically above. In the present embodiment, the first frame 61 and the second frame 62 are disposed at positions overlapping each other when viewed from vertically above, but may be disposed at positions offset from each other. The third frame 63 is also disposed at a position overlapping the first frame 61 and the second frame 62, so that the extension member 66 can be omitted.

The first support leg 64 includes four leg members 64A. Each leg member 64A extends upward from an end portion of the extension member 66, and an upper end portion thereof is connected to a corner portion of the second frame 62. As described above, the first support leg 64 is interposed between the second frame 62 and the extension member 66, and supports the second frame 62. In addition, the first frame 61 is also supported by the first support leg 64 by connecting a corner portion of the first frame 61 to each leg member 64A via a bracket or the like.

The second support leg 65 includes four leg members 65A. Each leg member 65A extends downward from a corner portion of the third frame 63. A lower end of each leg member 65A is fixed to the frame body 21 with a bolt or the like.

A first crossbar 68 as a reinforcing member is interposed between the first frame 61 and the second frame 62. A second crossbar 70 as a reinforcing member is interposed between the leg members 65A constituting the second support leg 65.

The work machine 100 includes a plurality of sensors including a hydrogen gas sensor 54 functioning as a hydrogen detector. The hydrogen gas sensor 54 detects hydrogen (hydrogen gas) in the machine chamber 14. The hydrogen gas sensor 54 is disposed at an upper portion in the machine chamber 14 in consideration of upward movement of hydrogen. A plurality of the hydrogen gas sensors 54 may be provided at distant positions in the machine chamber 14, and each of the hydrogen gas sensors is disposed at a position through which hydrogen easily passes. In the present embodiment, a vent 19 is formed in the upper wall portion 13U located at the upper portion of the cover 13, and the hydrogen gas sensor 54 is disposed near the vent 19.

By providing the hydrogen gas sensor 54, when hydrogen leaks in the machine chamber 14, the leakage of hydrogen is quickly detected. Hydrogen may leak from the fuel cell device 32, the hydrogen pipe 41, a connection portion between the fuel cell device 32 and the hydrogen pipe 41, and the like. In this case, it is preferable to promptly release the leaked hydrogen upward.

On the other hand, in the support structure 60, the opening 63C surrounded by the frame 63 is formed in the third frame 63 interposed between the hydrogen tank 31 and the fuel cell device 32. Therefore, even when hydrogen leaks from the fuel cell device 32 and the connection portion thereof, the hydrogen can quickly move upward from the third frame 63 through the opening 63C. As described above, the opening 63C is formed to guide leaked hydrogen upward from the third frame 63. In addition, since the openings 61C and 62C surrounded by the respective frames 61 and 62 are formed also in the first frame 61 and the second frame 62, hydrogen passing through the opening 63C can move upward through the openings 61C and 62C. As a result, the hydrogen leaked from the fuel cell device 32 and the connection portion thereof can be quickly moved upward without being retained in the support structure 60. The hydrogen gas that has moved upward from the support structure 60 is discharged to the outside of the machine chamber 14 through the vent 19 formed in the upper wall portion 13U of the cover 13.

Since the hydrogen gas sensor 54 is disposed near the vent 19, hydrogen passing through the vent 19 is detected by the hydrogen gas sensor 54. By disposing the hydrogen gas sensor 54 on the path through which hydrogen passes in this manner, leakage of hydrogen can be reliably detected.

As described above, in the first embodiment, when hydrogen leaks from at least one of the fuel cell device 32, the hydrogen pipe 41, and a connection portion between the fuel cell device 32 and the hydrogen pipe 41, the hydrogen moves upward from the third frame 63 through the opening 63C formed in the third frame 63. As a result, the leaked hydrogen is released above the fuel cell device 32, and it is possible to prevent the hydrogen from being retained in the space where the fuel cell device 32 is disposed. In addition, since the vent 19 is formed in the upper wall portion 13U of the cover 13, the leaked hydrogen is discharged from the machine chamber 14 through the vent 19.

### [Second Embodiment]

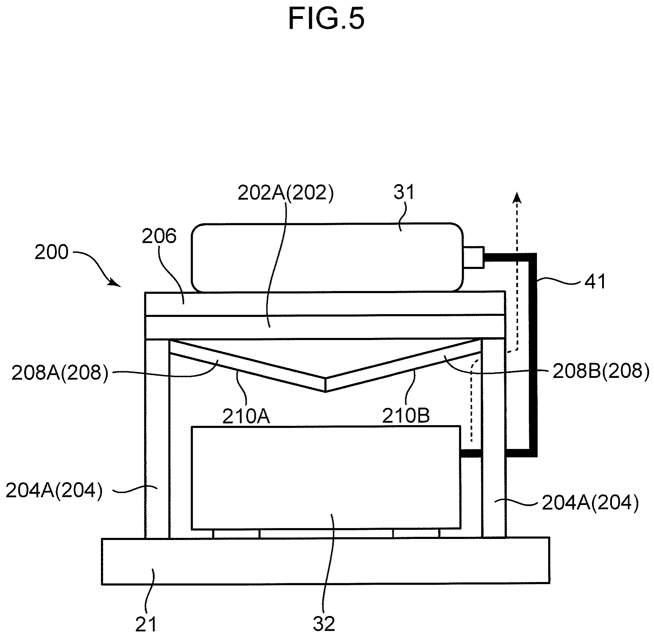

Next, a support structure 200 included in a work machine 100 according to a second embodiment of the present disclosure will be described. The structure other than the support structure 200 is basically not different from that of the first embodiment, and thus the description thereof will be omitted. The support structure 200 according to the second embodiment has a structure as illustrated in FIG. 5. FIG. 5 is a diagram schematically illustrating the support structure 200, and corresponds to a cross-sectional view taken along line A-A of FIG. 1 similarly to FIG. 3. In FIG. 5, illustration of a cover that defines the machine chamber 14, the heat exchanger 33, the electronic device 34, and the cooling fan 35 is omitted. In FIG. 5, the hydrogen tank 31 is disposed in one stage in the vertical direction, but the hydrogen tanks 31 may be disposed in two stages in the vertical direction as in the above-described support structure 60.

The support structure 200 includes a frame 202 supporting the hydrogen tank 31, support legs 204 supporting the frame 202, a plate-like member 206 interposed between the frame 202 and the hydrogen tank 31, and a guide member 208 interposed between the frame 202 and the fuel cell device 32. A portion including the plate-like member 206 and the guide member 208 corresponds to an "intervening portion" of the claims.

The frame 202 includes a pair of long side parts 202A parallel to the longitudinal direction of the hydrogen tank 31 and a pair of short side parts (not illustrated) disposed perpendicular to the longitudinal direction, and these are connected to each other to form a rectangular frame.

The support leg 204 includes four leg members 204A extending downward from the four corners of the frame 202.

The plate-like member 206 is made of a plate material having a predetermined thickness. The plate-like member 206 is formed in, for example, a rectangular shape, and is provided so as to cover the outer edge of the frame 202. Therefore, in the present embodiment, the opening surrounded by the frame 202 is closed by the plate-like member 206. As a result, the entry of liquid such as muddy water falling from above can be prevented by the plate-like member 206.

The guide member 208 is disposed below the plate-like member 206 and the frame 202. The guide member 208 includes a pair of plate members 208A and 208B having a predetermined thickness. Each of the plate members 208A and 208B extends in a horizontal direction (depth direction) perpendicular to the longitudinal direction of the hydrogen tank 31. For example, the plate members 208A and 208B extend in the depth direction to the vicinity of both ends of the short side part constituting the frame 202.

Further, the plate member 208A is inclined downward from one side to the other side in the longitudinal direction of the long side part 202A. The plate member 208B is inclined downward from the other side toward one side in the longitudinal direction. The lower end portion of the plate member 208A and the lower end portion of the plate member 208B are connected to each other. As a result, an inclined surface 210A is formed on a side of the plate member 208A facing the fuel cell device 32, and an inclined surface 210B is formed on a side of the plate member 208B facing the fuel cell device 32. The inclined surfaces 210A and 210B correspond to "guide surfaces" in the claims.

In the support structure 200, since the opening formed in the frame 202 is closed by the plate-like member 206, hydrogen cannot move upward through the opening. On the other hand, the guide member 208 having the inclined surfaces 210A and 210B is provided at a position below the plate-like member 206. Each of the inclined surfaces 210A and 210B corresponds to a "guide portion" in the claims. For example, when hydrogen gas leaks from a connection portion of the fuel cell device 32 to the hydrogen pipe 41, hydrogen moves as indicated by a broken line arrow. Specifically, when the leaked hydrogen moves upward, the hydrogen reaches the inclined surface 210B of the guide member 208. At this time, hydrogen moves further upward along the inclined surface 210B, and hydrogen passes between the leg members 204A and moves upward from the frame 202 and the plate-like member 206. As described above, the leaked hydrogen moves upward along the inclined surface 210B of the plate member 208B, whereby the hydrogen is guided from a position below the frame 202 and the plate-like member 206 to a position above these members. As a result, hydrogen can be released upward from the support structure 200, and retention of hydrogen is suppressed.

As described above, in the second embodiment, when hydrogen leaks, the hydrogen is guided by the inclined surfaces 210A and 210B to move above the plate-like member 206. This makes it possible to suppress retention of hydrogen.

### [Third Embodiment]

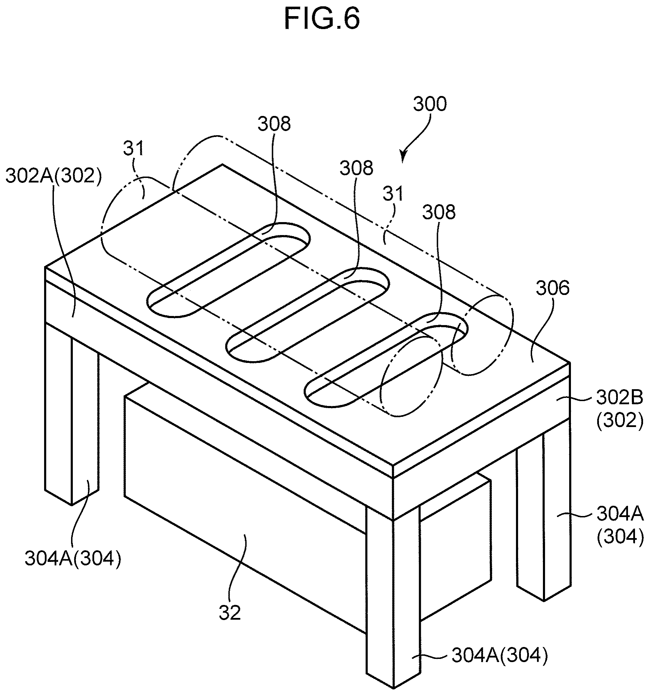

Next, a support structure 300 included in a work machine 100 according to a third embodiment of the present disclosure will be described. The structure other than the support structure 300 is basically not different from that of the first embodiment, and thus the description thereof will be omitted. The support structure 300 according to the third embodiment has a structure as illustrated in FIG. 6. FIG. 6 is a perspective view schematically illustrating the support structure 300.

The support structure 300 includes a frame 302 that supports the hydrogen tank 31 (indicated by a broken line in FIG. 6), a support leg 304 that supports the frame 302, and a plate-like member 306 interposed between the frame 302 and the hydrogen tank 31.

The frame 302 includes a pair of long side parts 302A parallel to the longitudinal direction of the hydrogen tank 31 and a pair of short side parts 302B disposed perpendicular to the longitudinal direction, and these are connected to each other to form a rectangular frame.

The support leg 304 includes four leg members 304A extending downward from the four corners of the frame 302.

The plate-like member 306 is made of a plate material having a predetermined thickness. The plate-like member 306 is formed in, for example, a rectangular shape, and is provided so as to cover the outer edge of the frame 302. Therefore, in the present embodiment, the opening surrounded by the frame 302 is closed by the plate-like member 306. As a result, the entry of liquid such as muddy water falling from above can be prevented by the plate-like member 306. The plate-like member 306 corresponds to an "intervening portion" in the claims.

Three vents 308 penetrating in the plate thickness direction are formed in the plate-like member 306. The vents 308 are formed at substantially equal intervals in the longitudinal direction of the long side part 302A. The vent 308 is formed as an elongated hole extending along the longitudinal direction of the short side part 302B. In the present embodiment, the three vents 308 are formed, but at least one vent 308 may be formed. In addition, the shape of the vent 308 may be appropriately changed, for example, a circular shape, an elliptical shape, or the like. That is, the number and shape of the vents 308 are not limited as long as hydrogen can pass through the vents 308 in a state where the hydrogen tank 31 is disposed on the plate-like member 306 and entry of liquid such as muddy water can be suppressed. The vent 308 also corresponds to a "guide portion" in the claims.

By forming the vents 308 in the plate-like member 306, for example, even when hydrogen leaks from the fuel cell device 32, the hydrogen moves upward through the vents 308 of the plate-like member 306 and can move upward from the plate-like member 306. As a result, hydrogen can be released upward from the support structure 300, and retention of hydrogen is suppressed.

As described above, in the third embodiment, when hydrogen leaks, the hydrogen moves upward from the plate-like member 306 through the vent 308 formed in the plate-like member 306. This makes it possible to suppress retention of hydrogen.

### [Fourth Embodiment]

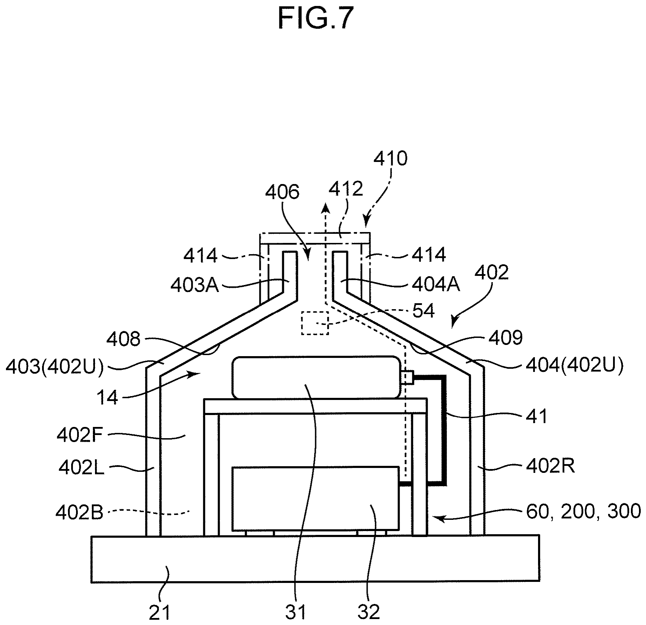

Next, a work machine 100 according to a fourth embodiment of the present disclosure will be described. The work machine 100 according to the fourth embodiment includes a cover 402 that defines a machine chamber 14 that covers the hydrogen tank 31, the fuel cell device 32, and the like. FIG. 7 is a diagram illustrating the inside of the machine chamber 14 of the work machine 100, and is a cross-sectional view taken along line A-A in FIG. 1. Any one of the support structures 60, 200, and 300 described above is appropriately used as the support structure accommodated in the machine chamber 14, and the heat exchanger 33, the electronic device 34, the cooling fan 35, and the like are not illustrated. The intake port 16, the exhaust port 17, and the like are also not illustrated.

The cover 402 includes a plurality of wall portions. Specifically, the cover 402 includes a front wall portion 402F located on the front side of the machine chamber 14, a rear wall portion 402B located on the rear side of the machine chamber 14, a left wall portion 402L located on the left side of the machine chamber 14, a right wall portion 402R located on the right side of the machine chamber 14, and an upper wall portion 402U located above the machine chamber 14. The left wall portion 402L, the right wall portion 402R, and the upper wall portion 402U extend in the depth direction (direction perpendicular to the paper surface) so as to close a space between the front wall portion 402F and the rear wall portion 402B.

The upper wall portion 402U of the present embodiment includes a first upper wall portion 403 positioned to cover the left side region of the machine chamber 14 from above, and a second upper wall portion 404 positioned to cover the right side region of the machine chamber 14 from above.

One end of the first upper wall portion 403 is connected to the upper end of the left wall portion 402L. The first upper wall portion 403 is inclined upward toward the right side of the machine chamber 14, and a distal end portion 403A extends vertically upward.

One end of the second upper wall portion 404 is connected to the upper end of the right wall portion 402R. The second upper wall portion 404 is inclined upward toward the left side of the machine chamber 14, and a distal end portion 404A extends vertically upward.

The distal end portion 403A of the first upper wall portion 403 and the distal end portion 404A of the second upper wall portion 404 face each other with a predetermined interval. As a result, an opening 406 communicating with the outside of the machine chamber 14 is formed in the upper portion of the cover 402. With the above configuration, an inclined surface 408 for guiding hydrogen to the opening 406 is formed on the machine chamber 14 side of the first upper wall portion 403. Similarly, an inclined surface 409 for guiding hydrogen to the opening 406 is formed on the machine chamber 14 side of the second upper wall portion 404. In the present embodiment, the distal end portion 403A extending vertically upward is formed at the end portion of the first upper wall portion 403, and the distal end portion 404A extending vertically upward is formed at the end portion of the second upper wall portion 404. However, these may be omitted.

For example, when hydrogen leaks from a connection portion of the fuel cell device 32 to the hydrogen pipe 41, the hydrogen moves upward as indicated by an arrow indicated by a broken line. Specifically, when hydrogen moves upward and reaches the upper wall portion 402U, the hydrogen moves upward along the inclined surface 409 of the second upper wall portion 404, and the hydrogen is further discharged from the machine chamber 14 through the opening 406. In this way, by forming the inclined surfaces 408 and 409 on the first upper wall portion 403 and the second upper wall portion 404, respectively, the hydrogen gas moved upward is guided to the opening 406 along the inclined surfaces 408 and 409, and is reliably discharged from the machine chamber 14.

When the hydrogen gas sensor 54 is provided in the machine chamber 14, the hydrogen gas sensor is preferably provided near the opening 406. Specifically, the hydrogen gas sensor 54 is provided near the opening 406 as indicated by a broken line, so that the hydrogen gas sensor 54 detects hydrogen passing through the opening 406.

In addition, it is preferable to provide an opening cover 410 as indicated by an alternate long and short dash line in the opening 406. The opening cover 410 includes a flat plate 412 that covers the opening 406, and a plurality of leg members 414 that support the flat plate 412. By providing the opening cover 410, the opening 406 is covered with the flat plate 412, and entry of liquid such as muddy water into the machine chamber 14 is suppressed. Hydrogen discharged from the opening 406 is discharged to the outside through a gap formed between the leg members 414.

As described above, in the fourth embodiment, when hydrogen leaks, the hydrogen is discharged from the opening 406 formed in the cover 402, so that the hydrogen is prevented from being retained in the cover 402. In addition, since hydrogen is guided to the opening 406 via the inclined surfaces 408 and 409, the hydrogen is reliably discharged from the opening 406 to the outside of the cover 402 via the inclined surfaces 408 and 409.

### [Fifth Embodiment]

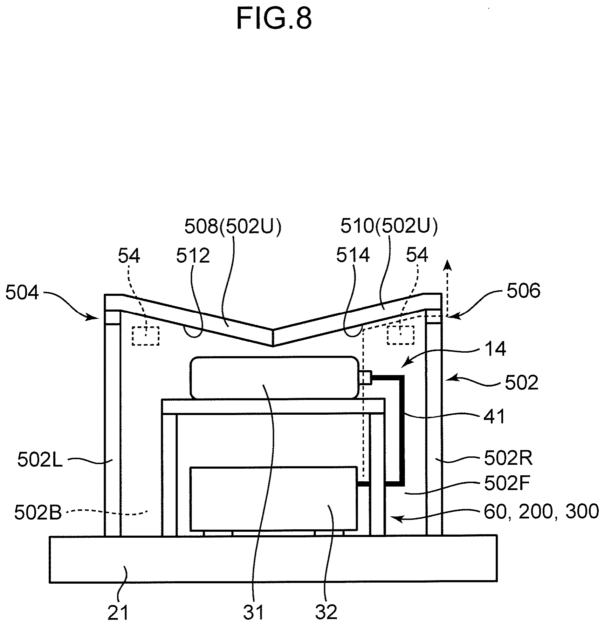

Next, a work machine 100 according to a fifth embodiment of the present disclosure will be described. The work machine 100 according to the fifth embodiment includes a cover 502 that defines a machine chamber 14 that covers the hydrogen tank 31, the fuel cell device 32, and the like. FIG. 8 is a diagram illustrating the inside of the machine chamber 14 of the work machine 100, and is a cross-sectional view taken along line A-A in FIG. 1. Any one of the support structures 60, 200, and 300 as described above is appropriately used as the support structure accommodated in the machine chamber 14, and the heat exchanger 33, the electronic device 34, the cooling fan 35, and the like are not illustrated. The intake port 16, the exhaust port 17, and the like are also not illustrated.

The cover 502 includes a plurality of wall portions. Specifically, the cover 502 includes a front wall portion 502F located on the front side of the machine chamber 14, a rear wall portion 502B located on the rear side of the machine chamber 14, a left wall portion 502L located on the left side of the machine chamber 14, a right wall portion 502R located on the right side of the machine chamber 14, and an upper wall portion 502U located above the machine chamber 14. The left wall portion 502L, the right wall portion 502R, and the upper wall portion 502U extend in the depth direction (direction perpendicular to the paper surface) so as to close a space between the front wall portion 502F and the rear wall portion 502B.

An opening 504 that communicates the machine chamber 14 with the outside is formed at the upper end of the left wall portion 502L or in the vicinity thereof. An opening 506 that communicates the machine chamber 14 with the outside is formed at the upper end of the right wall portion 502R or in the vicinity thereof. The opening 504 and the opening 506 are both located on the upper portion of the cover 502.

The upper wall portion 502U includes a first upper wall portion 508 positioned to cover the left side region of the machine chamber 14 from above and a second upper wall portion 510 positioned to cover the right side region of the machine chamber 14 from above.

The first upper wall portion 508 is connected to the upper end of the left wall portion 502L. The first upper wall portion 508 is inclined downward toward the right side of the machine chamber 14. The second upper wall portion 510 is connected to the upper end of the right wall portion 502R. The second upper wall portion 510 is inclined downward toward the left side of the machine chamber 14. A distal end (lower end) of the first upper wall portion 508 and a distal end (lower end) of the second upper wall portion 510 are connected to each other.

With the above configuration, an inclined surface 512 for guiding hydrogen to the opening 504 is formed on the machine chamber 14 side of the first upper wall portion 508, and an inclined surface 514 for guiding hydrogen to the opening 506 is formed on the machine chamber 14 side of the second upper wall portion 510.

For example, when hydrogen leaks from a connection portion of the fuel cell device 32 to the hydrogen pipe 41, the hydrogen moves as indicated by a broken line. Specifically, when hydrogen moves upward and reaches the second upper wall portion 510, the hydrogen moves upward along the inclined surface 514 and is discharged from the machine chamber 14 through the opening 506. In this way, by forming the inclined surfaces 512 and 514 on the first upper wall portion 508 and the second upper wall portion 510, respectively, hydrogen that has moved upward is guided to the opening 406 along the inclined surfaces 512 and 514 and is reliably discharged from the machine chamber 14.

When the hydrogen gas sensor 54 is provided in the machine chamber 14, the hydrogen gas sensor is preferably provided near the opening 504 and the opening 506. Specifically, the hydrogen gas sensor 54 is provided near the openings 504 and 506 as indicated by broken lines, so that the hydrogen gas sensor 54 detects hydrogen passing through the openings 504 and 506.

As described above, in the fifth embodiment, when hydrogen leaks, the hydrogen is discharged from the openings 504 and 506 formed in the cover 502, so that the hydrogen is prevented from being retained in the cover 502. In addition, since hydrogen is guided to the openings 504 and 506 via the inclined surfaces 512 and 514, the hydrogen is reliably discharged from the openings 504 and 506 to the outside of the cover 502 via the inclined surfaces 512 and 514.

### [Sixth Embodiment]

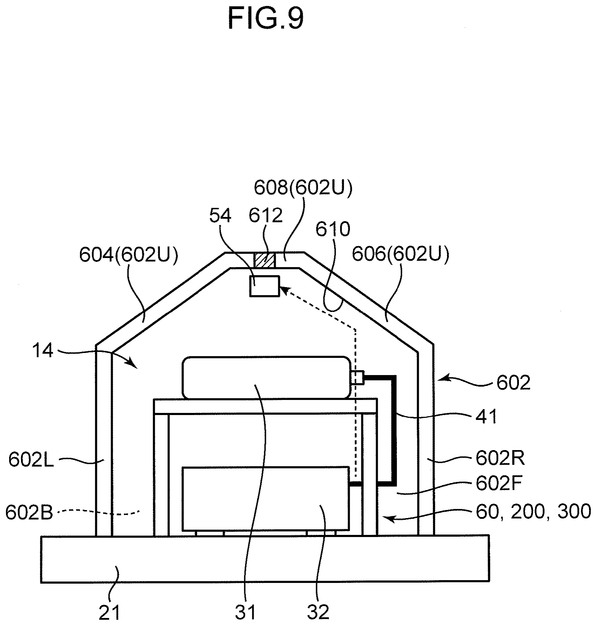

Next, a work machine 100 according to a sixth embodiment of the present disclosure will be described. The work machine 100 according to the sixth embodiment includes a cover 602 that defines a machine chamber 14 that covers the hydrogen tank 31 and the fuel cell device 32. FIG. 9 is a diagram illustrating the inside of the machine chamber 14 of the work machine 100, and is a cross-sectional view taken along line A-A in FIG. 1. Any one of the support structures 60, 200, and 300 as described above is appropriately used as the support structure accommodated in the machine chamber 14, and the heat exchanger 33, the electronic device 34, the cooling fan 35, and the like are not illustrated. The intake port 16, the exhaust port 17, and the like are also not illustrated.

The cover 602 includes a plurality of wall portions. Specifically, the cover 602 includes a front wall portion 602F located on the front side of the machine chamber 14, a rear wall portion 602B located on the rear side of the machine chamber 14, a left wall portion 602L located on the left side of the machine chamber 14, a right wall portion 602R located on the right side of the machine chamber 14, and an upper wall portion 602U located above the machine chamber 14. The left wall portion 602L, the right wall portion 602R, and the upper wall portion 602U extend in the depth direction (direction perpendicular to the paper surface) so as to close a space between the front wall portion 602F and the rear wall portion 602B.

The upper wall portion 602U of the present embodiment includes a first upper wall portion 604 positioned to cover the left side region of the machine chamber 14 from above, a second upper wall portion 606 positioned to cover the right side region of the machine chamber 14 from above, and a third upper wall portion 608 connecting the first upper wall portion 604 and the second upper wall portion 606. The first upper wall portion 604 is inclined upward toward the right side of the machine chamber 14. The second upper wall portion 606 is inclined upward toward the left side of the machine chamber 14.

In the above embodiment, since no opening is formed in the upper wall portion 602U, there is an advantage that liquid such as muddy water hardly enters the machine chamber 14 from above. When hydrogen leaks in the machine chamber 14, it is preferable to promptly discharge hydrogen from the machine chamber 14. In addition, it is more preferable to quickly detect leakage of hydrogen. In the present embodiment, the hydrogen gas sensor 54 is provided in the vicinity of the third upper wall portion 608 located at the uppermost portion of the cover 602 in the machine chamber 14 that is a space surrounded by the cover 602.

For example, when hydrogen leaks from a connection portion of the fuel cell device 32 to the hydrogen pipe 41, hydrogen moves upward as indicated by a broken line. Specifically, when the hydrogen gas moves upward and reaches the second upper wall portion 606, the hydrogen moves upward along an inclined surface 610 formed in the second upper wall portion 606 and reaches the hydrogen gas sensor 54 provided in the vicinity of the third upper wall portion 608. As described above, the leaked hydrogen is guided to the hydrogen gas sensor 54 provided in the vicinity of the third upper wall portion 608 by an inclined surface 610 of the second upper wall portion 606, and the leakage of hydrogen is quickly detected by the hydrogen gas sensor 54.

An opening/closing mechanism 612 can also be provided at a hatched position of the third upper wall portion 608. The opening/closing mechanism 612 can appropriately communicate between the machine chamber 14 and the outside by manually or automatically opening and closing. For example, when hydrogen is detected by the hydrogen gas sensor 54, the opening/closing mechanism 61 is manually or automatically operated to cause the machine chamber 14 to communicate with the outside, so that hydrogen in the machine chamber 14 can be promptly discharged to the outside.

As described above, in the sixth embodiment, when hydrogen leaks, the hydrogen is detected by the hydrogen gas sensor 54 disposed above the cover 602.

### [Seventh Embodiment]

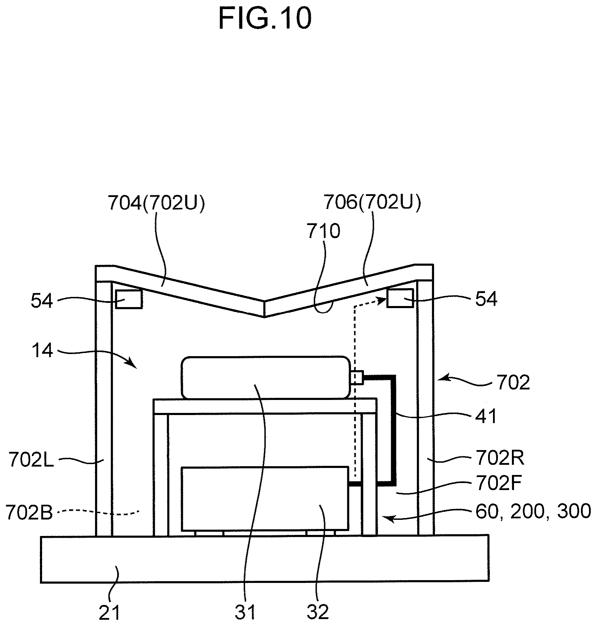

Next, a work machine 100 according to a seventh embodiment of the present disclosure will be described. The work machine 100 according to the seventh embodiment includes a cover 702 that defines a machine chamber 14 that covers the hydrogen tank 31 and the fuel cell device 32. FIG. 10 is a diagram illustrating the inside of the machine chamber 14 of the work machine 100, and is a cross-sectional view taken along line A-A in FIG. 1. Any one of the support structures 60, 200, and 300 as described above is appropriately used as the support structure accommodated in the machine chamber 14, and the heat exchanger 33, the electronic device 34, the cooling fan 35, and the like are not illustrated. The intake port 16, the exhaust port 17, and the like are also not illustrated.

The cover 702 includes a plurality of wall portions. Specifically, the cover 702 includes a front wall portion 702F located on the front side of the machine chamber 14, a rear wall portion 702B located on the rear side of the machine chamber 14, a left wall portion 14L located on the left side of the machine chamber 14, a right wall portion 702R located on the right side of the machine chamber 14, and an upper wall portion 702U located above the machine chamber 14.

The upper wall portion 702U of the present embodiment includes a first upper wall portion 704 positioned to cover the left side region of the machine chamber 14 from above, and a second upper wall portion 706 positioned to cover the right side region of the machine chamber 14 from above. The first upper wall portion 704 is inclined downward toward the right side of the machine chamber 14. The second upper wall portion 706 is inclined downward toward the left side of the machine chamber 14. The distal end of the first upper wall portion 704 and the distal end (lower end) of the second upper wall portion 706 are connected to each other.

In the above embodiment, since no opening is formed in the upper wall portion 702U, there is an advantage that liquid such as muddy water hardly enters the machine chamber 14 from above. When hydrogen leaks in the machine chamber 14, it is preferable to promptly discharge hydrogen from the machine chamber 14. In addition, it is more preferable to quickly detect leakage of hydrogen. In the present embodiment, the hydrogen gas sensors 54 are disposed in the vicinity of the coupling portion between the upper end of a left wall portion 704L and the first upper wall portion 704 and in the vicinity of the coupling portion between the upper end of a right wall portion 702R and the second upper wall portion 706, respectively.

For example, when hydrogen leaks from a connection portion of the fuel cell device 32 to the hydrogen pipe 41, hydrogen moves upward as indicated by a broken line. Specifically, when hydrogen moves upward and reaches the second upper wall portion 706, the hydrogen moves upward along an inclined surface 710 formed in the second upper wall portion 706 and reaches the hydrogen gas sensor 54 disposed near the upper end of the right wall portion 702R. As described above, the hydrogen gas is guided to the hydrogen gas sensor 54 along the inclined surface 710 of the second upper wall portion 706, and the leakage of the hydrogen gas is reliably detected by the hydrogen gas sensor 54.

As described above, in the seventh embodiment, when hydrogen leaks, the hydrogen is detected by the hydrogen gas sensor 54 disposed above the cover 702.

### [Modifications]

The embodiments of the present disclosure have been described above, but the present disclosure is not limited to the embodiments, and includes the following modifications, for example.

For example, in the first embodiment and the fourth to seventh embodiments, the covers 13, 402, 502, 602, and 702 that define the machine chamber 14 are formed in a substantially rectangular parallelepiped shape as a whole, but the present invention is not necessarily limited thereto. For example, the cover may be appropriately changed to a cylindrical shape. That is, the shape of the cover is not particularly limited as long as the cover can cover the hydrogen tank 31 and the fuel cell device 32.

In the above embodiment, the fuel cell device 32 is adopted as an example of the energy generation device, but the energy generation device is not necessarily limited to the fuel cell device 32. For example, it is not particularly limited as long as it generates energy by using hydrogen as an energy source, such as a hydrogen engine.

In the above embodiment, the hydrogen tank 31 is supported by the support structures 60, 200, and 300, but the fuel cell device 32 may also be supported by the support structure. Alternatively, while the fuel cell device 32 is supported by the support structure, the hydrogen tank 31 may be supported by the covers 13, 402, 502, 602, and 702 via a bracket or the like. In short, at least one of the hydrogen tank 31 and the fuel cell device 32 may be supported by the support structure, and the fuel cell device 32 may be disposed below the hydrogen tank 31.

In the above embodiment, the first frame 61 is formed in the frame in which the pair of long side parts 61A and the pair of short side parts 61B are connected to each other. However, a reinforcing member may be appropriately provided in the opening 61C surrounded by the first frame 61 as long as the reinforcing member does not interfere with the first hydrogen tank 31A. Note that the second frame 62, the third frame 63, and the frames 202 and 302 can be similarly deformed.

In the above embodiment, each of the frames 61, 62, 63, 202, and 302 is formed of a rectangular frame, but is not necessarily limited to a rectangle. For example, when the frame is viewed from above, the outer shape of the frame may be formed into a parallelogram or a trapezoid. In addition to the rectangle, the outer shape of the frame may be formed into a polygon of a pentagon or more when the frame is viewed from above.

In the above embodiment,each of the support legs 64, 65, 204, and 304 is constituted by the four leg members 64A, 65A, 204A, and 304A, but the number of leg members is not limited to four. For example, the number of leg members may be appropriately changed according to the weight or the like of the hydrogen tank 31, such as a configuration including six leg members.

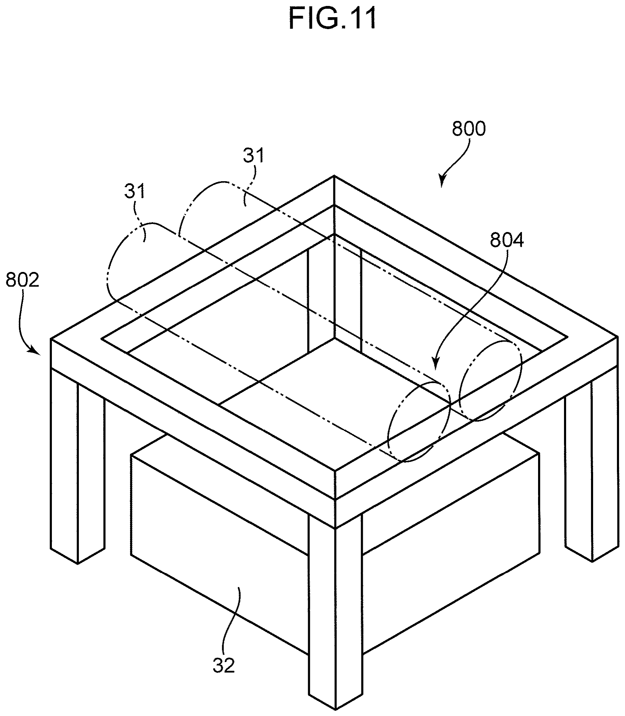

In the above embodiment, in the support structure 60 illustrated in FIGS. 3 and 4, the first frame 61 and the second frame 62 are disposed above the third frame 63, the first hydrogen tank 31A is supported by the first frame 61, and the second hydrogen tank 31B is supported by the second frame 62. However, the hydrogen tank 31 may be supported by the third frame 63. Specifically, a support structure 800 illustrated in the perspective view of FIG. 11 corresponds to this. The support structure 800 includes a frame 802 as an intervening portion between the hydrogen tank 31 and the fuel cell device 32. The hydrogen tank 31 is supported by the frame 802. An opening 804 surrounded by the frame 802 is formed in the frame 802. By forming the opening 804, for example, even when hydrogen leaks from a connection portion between the fuel cell device 32 and a hydrogen pipe (not illustrated), the hydrogen is guided upward from the frame 802 through the opening 804. This suppresses retention of hydrogen.

As described above, according to the present disclosure, there is provided a work machine capable of suppressing retention of hydrogen when the hydrogen leaks.

A work machine according to a first aspect includes a hydrogen tank that stores hydrogen, an energy generation device that is disposed below the hydrogen tank and generates energy by using the hydrogen as an energy source, a hydrogen pipe that connects the hydrogen tank and the energy generation device, and a support structure that supports at least one of the hydrogen tank and the energy generation device, in which the support structure includes an intervening portion located between the hydrogen tank and the energy generation device, and the intervening portion includes a guide portion that guides the hydrogen from a position below the intervening portion to a position above the intervening portion.

In the work machine, when hydrogen leaks from at least one of the energy generation device, the hydrogen pipe, and the connection portion thereof, the hydrogen moves upward from the intervening portion via the guide portion provided in the intervening portion. As a result, hydrogen can be released upward from the energy generation device, and retention of hydrogen can be suppressed.

According to a second aspect, the work machine according to the first aspect desirably further includes the following features. That is, in the work machine according to the second aspect, it is preferable that the intervening portion includes a frame, and the guide portion includes an opening surrounded by the frame. In the second aspect, when hydrogen leaks, the hydrogen moves upward from the intervening portion through the opening surrounded by the frame. This makes it possible to suppress retention of hydrogen.

In a third aspect, the work machine according to the first aspect preferably further includes the following features. That is, in the work machine according to the third aspect, it is preferable that the intervening portion includes a plate-like member and a guide member, and the guide member is disposed below the plate-like member, and includes a guide surface as the guide portion for guiding the hydrogen from a position below the plate-like member to a position above the plate-like member. In the third aspect, when hydrogen leaks, the hydrogen is guided by the guide surface to move above the plate-like member. This makes it possible to suppress retention of hydrogen.

In a fourth aspect, the work machine according to the first aspect preferably further includes the following features. That is, in the work machine according to the fourth aspect, it is preferable that the intervening portion includes a plate-like member, and the guide portion includes at least one vent formed in the plate-like member. In the fourth aspect, when hydrogen leaks, the hydrogen moves upward from the plate-like member through the vent formed in the plate-like member. This makes it possible to suppress retention of hydrogen.

In a fifth aspect, the work machine according to any one of the first to fourth aspects preferably further includes the following features. That is, it is preferable that the work machine according to the fifth aspect further includes a cover that covers the hydrogen tank, in which an opening is formed in an upper portion of the cover. In the fifth aspect, it is possible to suppress deterioration of the hydrogen tank and the like due to direct sunlight, and it is possible to prevent the energy generation device and the like from being sprinkled with water. When hydrogen leaks, the hydrogen is discharged from the opening formed in the cover, so that the hydrogen is prevented from being retained in the cover.

In a sixth aspect, the work machine according to the fifth aspect preferably further includes the following features. That is, in the work machine according to the sixth aspect, the cover preferably has an inclined surface for guiding the hydrogen to the opening. In the sixth aspect, when hydrogen leaks, the hydrogen is guided to the opening via the inclined surface. As a result, hydrogen is reliably discharged from the opening to the outside of the cover.

In a seventh aspect, the work machine according to any one of the first to fourth aspects preferably further includes the following features. That is, the work machine according to the seventh aspect preferably further includes a cover that covers the hydrogen tank, and a hydrogen detector that is disposed in a space surrounded by the cover. In the seventh aspect, when hydrogen leaks, the hydrogen is detected by the hydrogen detector.

In an eighth aspect, the work machine according to the seventh aspect preferably further includes the following features. That is, in the work machine according to the eighth aspect, preferably, an opening is formed in an upper portion of the cover, and the hydrogen detector is disposed near the opening. In the eighth aspect, in a case where hydrogen leaks, the hydrogen is discharged to the outside through an opening formed in an upper portion of the cover. Further, leakage of hydrogen is detected by a hydrogen detector disposed near the opening. The vicinity of the opening may be, for example, a position where the opening and the hydrogen detector are adjacent to each other, a position directly below the opening, or a position directly beside the opening.

## Claims

1. A work machine comprising:
a hydrogen tank that stores hydrogen;
an energy generation device that is disposed below the hydrogen tank and generates energy by using the hydrogen as an energy source;
a hydrogen pipe that connects the hydrogen tank and the energy generation device; and
a support structure that supports at least one of the hydrogen tank and the energy generation device,
wherein the support structure includes an intervening portion located between the hydrogen tank and the energy generation device, and
the intervening portion includes a guide portion that guides the hydrogen from a position below the intervening portion to a position above the intervening portion.

2. The work machine according to claim 1, wherein
the intervening portion includes a frame, and
the guide portion includes an opening surrounded by the frame.

3. The work machine according to claim 1, wherein
the intervening portion includes a plate-like member and a guide member, and
the guide member is disposed below the plate-like member, and includes a guide surface as the guide portion for guiding the hydrogen from a position below the plate-like member to a position above the plate-like member.

4. The work machine according to claim 1, wherein
the intervening portion includes a plate-like member, and
the guide portion includes at least one vent formed in the plate-like member.

5. The work machine according to any one of claims 1 to 4, further comprising a cover that covers the hydrogen tank,
wherein an opening is formed in an upper portion of the cover.

6. The work machine according to claim 5, wherein the cover has an inclined surface for guiding the hydrogen to the opening.

7. The work machine according to any one of claims 1 to 4, further comprising:
a cover that covers the hydrogen tank; and
a hydrogen detector that is disposed in a space surrounded by the cover.

8. The work machine according to claim 7, wherein
an opening is formed in an upper portion of the cover, and
the hydrogen detector is disposed near the opening.
